# EUROPEAN PATENT APPLICATION

(11) **EP 4 733 968 A1**
(43) Date of publication of application: **29.04.2026**
(21) Application number: 25209772.0
(22) Date of filing: 20.10.2025
(51) Int. Cl.: G06F 21/53, G06F 8/60, G06F 8/61

(54) **SECURELY DEPLOYING APPLICATIONS BY A CLOUD SERVICE PROVIDER**

(30) Priority: 25.10.2024 US 202418927696
(71) Applicant: Microsoft Technology Licensing, LLC, Redmond, WA 98052-6399 (US)
(72) Inventor: Mital, Subhav, Redmond, WA, 98052 (US); Colon, Julio Angel, Redmond, WA, 98052 (US); Salem, Magdy Shaaban ElSayed, Redmond, WA, 98052 (US); Butler Monterde, Patrick Luis, Redmond, WA, 98052 (US)
(74) Representative: Grünecker Patent- und Rechtsanwälte PartG mbB

(57) **Abstract**

Methods, apparatuses, and products for securely deploying cloud-native applications, including: creating, within a tenant's cloud deployment, a secure execution environment for an application, wherein the secure execution environment is managed exclusively by a cloud service provider; deploying, within the secure execution environment, the application, wherein source code for the application is stored in the secure execution environment; and deploying an agent within the secure execution environment, wherein the agent is configured to allow one or more conforming requests to access the application, block one or more tenant-initiated management operations for the secure environment, and allow one or more management operations for the secure environment that are initiated by the cloud service provider.

## Description

### BACKGROUND

The process of developing software has traditionally involved substantial effort and financial investment from software vendors. This process typically resulted in the creation of source code that included the software vendor's intellectual property. Prior to distributing their software products, software vendors would compile the source code into machine-readable instructions and package the machine-readable instructions as executable files. This compilation process not only made the software executable on a user's machine, but the compilation process also made it difficult to inspect the source code. Consequently, the compilation process allowed software vendors to distribute their software products widely, while still safeguarding the intellectual property that was contained in their source code.

Over time, however, the way that software vendors delivered software products to consumers changed. Software vendors began to deliver software products with source code that had not been compiled or delivered software products in some other way that made the source code visible to customers. Because these newer delivery models do not conceal the software vendor's source code, the intellectual property in the software vendor's source code is at risk of misappropriation. The inability to conceal source code may be particularly problematic for software developed through expensive and labor-intensive machine learning processes, where the source code may include sophisticated artificial intelligence models that required substantial investments to create. As such, there is a need to enable software vendors to deliver their software using modern delivery models, but without exposing their valuable work to misappropriation.

### SUMMARY

According to embodiments of the present disclosure, various methods, apparatus, and products for securely deploying cloud-native applications are described herein. In some aspects, securely deploying cloud-native applications includes: creating, within a tenant's cloud deployment, a secure execution environment for an application, wherein the secure execution environment is managed exclusively by a cloud service provider; deploying, within the secure execution environment, the application, wherein source code for the application is stored in the secure execution environment; and deploying an agent within the secure execution environment, wherein the agent is configured to allow conforming requests to access the application and blocks requests directed to management operations for the secure environment. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 illustrates a block diagram of an example system that includes both a secure execution environment and a standard execution environment that has not been augmented with additional security mechanisms.
Fig. 2 sets forth a flow chart illustrating an example method for securely deploying applications by a cloud service provider in accordance with some embodiments.
Fig. 3 sets forth a flow chart illustrating an example method for securely deploying applications by a cloud service provider in accordance with some embodiments.
Fig. 4 sets forth a flow chart illustrating an example method for securely deploying applications by a cloud service provider in accordance with some embodiments.
Fig. 5 sets forth a flow chart illustrating an example method for securely deploying applications by a cloud service provider in accordance with some embodiments.
Fig. 6 sets forth a flow chart illustrating an example method for securely deploying applications by a cloud service provider in accordance with some embodiments.
Fig. 7 sets forth a flow chart illustrating an example method for securely deploying applications by a cloud service provider in accordance with some embodiments.
Fig. 8 sets forth a flow chart illustrating an example method for securely deploying applications by a cloud service provider in accordance with some embodiments.
Fig. 9 sets forth an example of a computing device that may be used for some portion of securely deploying applications by a cloud service provider in accordance with some embodiments.
Fig. 10 sets forth a block diagram of a cloud service provider service architecture in accordance with some embodiments of the present disclosure.

### DESCRIPTION OF EMBODIMENTS

Software vendors may have various needs that are in conflict with each other. For example, a software vendor may need to be able to deploy their products in execution environments that protect their investments and prevent intellectual property ('IP') leakage, while also needing to be able to sell their products for deployment in a customer's environment, so that the software vendor can focus on developing software rather than supporting the environments that their software executes upon. Much like a traditional retailer, the software vendor's product is offered for sale and the purchaser subsequently takes possession of the product, so that the purchaser can use the software vendor's product. In that delivery model, however, the software vendor has a need to prevent the purchaser from accessing the software vendor's IP once the purchase has been completed.

Cloud service providers can play a pivotal role in satisfying these conflicting needs. For example, a cloud service provider may offer a marketplace for software vendors to offer their products for sale, and a cloud service provider may offer an execution environment that a purchaser can use to execute the software vendor's product. The cloud service provider may also offer various security features and place various guardrails around such execution environments to meet the software vendor's need to avoid IP leakage and protect their investment. The cloud service provider may deliver such security features in the form of a secure execution environment.

A secure execution environment, as the term is used here, represents an aggregation of resources such as physical or virtual compute resources, storage resources, networking resources, and other resources, paired with mechanisms that safeguard source code from misappropriation. By offering secure execution environments, a cloud service provider may allow software vendors to develop and deliver software in accordance with modern delivery models while still protecting the software vendor's source code from misappropriation.

A secure execution environment may include a variety of characteristics that make it secure and make it better suited to protect the intellectual property of a software developer. These characteristics may be achieved and enforce in a variety of ways. For example, the secure execution environment may be configured to prevent a user of the software application from inspecting the application's source code. Likewise, the secure execution environment may be configured to prevent an administrator of the execution environment from inspecting the application's source code. In addition, the secure execution environment may be configured to restrict the way that the application is accessed, in order to close potential vulnerabilities that could result in a malicious actor learning about the application's source code. The secure execution environment may be configured in other ways that provide additional security features or measures.

In order to configure the secure execution environment to provide various security features and measures, the secure execution environment may include specially designed logic that limits access to the underlying source code. Consider an example in which a software vendor offers an application for sale, a purchaser obtains the software, and the purchaser subsequently deploys the purchased software on a cluster of nodes such as a Kubernetes ('K8s') cluster that is part of the purchaser's cloud deployment. In this example, a collection of virtual machines (i.e., nodes) may be used to support the K8s cluster. Although the cluster of nodes are part of the purchaser's cloud deployment (which may also be referred to as a tenant's cloud deployment), where the purchaser would typically have the ability to access and manage the cluster of nodes, if the nodes are part of a secure execution environment, the nodes can be managed entirely by the cloud service provider with no access provided to an application's users, the cluster's administrators, or any other external users.

Each of the nodes within the secure execution environment may be secured using a node-level agent that executes on each node. Each node-level agent may be embodied, for example, as a kubelet that has been specially designed to restrict access to the source code by restricting access to the each of nodes (and images stored by each of the nodes) that are used to form the K8s cluster, to encrypt (at rest) the source code and the images that are associated with a node in the cluster, to encrypt any internal or external data communications that involve the cluster, or to otherwise restrict access to the nodes and source code in some other way. Readers will appreciate that because access to the underlying virtual machines is the cloud service provider, the execution environment as a whole may be secured from undesired access of the software vendor's intellectual property.

As the result of a cloud service provider offering secure execution environments, software vendors are increasingly likely to offer their applications for sale in a marketplace that is provided by the cloud service provider. Some software vendors may even choose to distribute their software applications exclusively through marketplaces of cloud service providers that offer secure execution environments, or software vendors may take other actions to ensure that their software applications are executed exclusively in secure execution environments. In fact, vendors may even require that their applications be deployed in a secure execution environment as part of their terms of sale or use.

Readers will appreciate that such secure execution environments may be more attractive to a software developer or software vendor, as the secure execution environments can protect the valuable investment made by the software developer or software vendor and provide greater protection for their products. In addition, if a particular cloud service provider can offer secure execution environments, the cloud service provider can be better protected from liability that may arise if a user's intellectual property or sensitive data is misappropriated. If a particular cloud service provider can offer secure execution environments, the cloud service provider may also be able to provide a more robust set of offerings that can better address the diverse needs of larger, more valuable customers. In fact, if a particular cloud service provider can offer secure execution environments and the cloud service provider has their own software offerings, the cloud service provider can be better positioned to protect their own software development investments by deploying their own software offerings in such secure execution environments.

Beyond securing a software vendor's source code, vendors may also require their applications to run in a secure execution environment for other reasons other than restricting access to their source code. For instance, since security functions are handled by the execution environment, the software application can operate more efficiently, utilizing fewer resources because security tasks have been offloaded. Likewise, since security functions are handled by the execution environment, software vendors may be able to get their products to the market faster and at a lower cost, as a software vendor may not need to spend time building certain security features into their applications since some security functions will be handled by the secure execution environment. As such, a cloud service provider that offers secure execution environments may have more attractive product offerings for potential customers and may increase its customer base by offering secure execution environments.

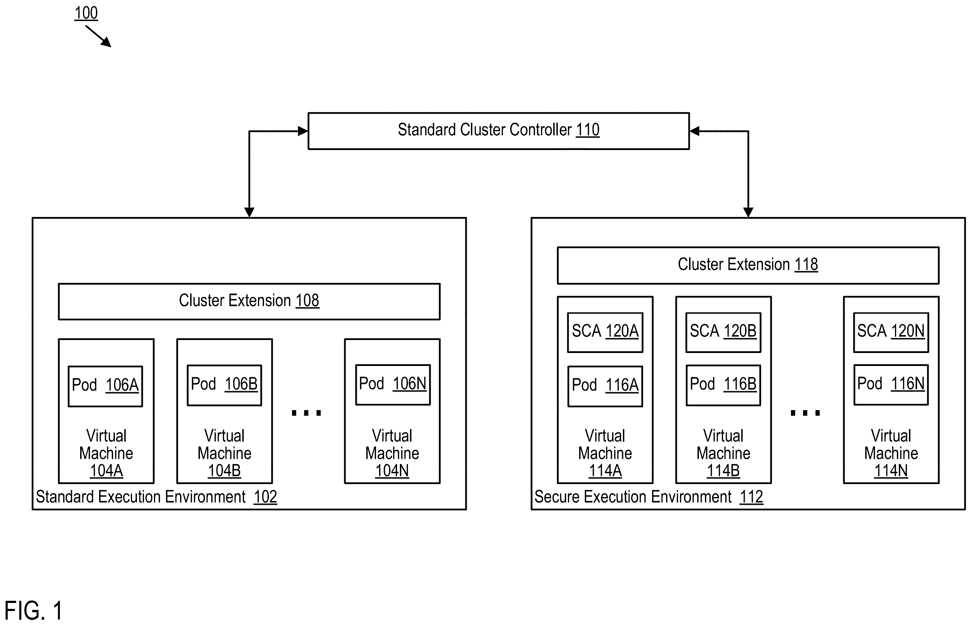

As an explanatory aid, Fig. 1 illustrates a block diagram of an example system 100 that includes both a secure execution environment 112 and a standard execution environment 102 that has not been augmented with all of the additional security mechanisms described in the present disclosure. The standard execution environment 102 includes a plurality of virtual machines ('VMs') 104A, 104B, and 104N. Each VM 104A-N may be embodied as a software emulation of a physical computer that runs within a host system but otherwise operates like a physical machine. For example, each VM 104A-N emulates having its own hardware such as its own CPU, memory, network interfaces, and storage.

In some embodiments, the VMs 104A-N can be cloud computing instances offered by a cloud service provider. The VMs 104A-N may be embodied as any type of virtual machine such as, for example, general purpose VMs, VMs that include specific hardware such as one or more graphics processing units ('GPUs'), VMs that are optimized for certain types of resources (e.g., compute-optimized VMs, storage-optimized VMs), VMs that are optimized for certain types of workloads, and so on. Although elements 104A-N and 114A-N are labelled as virtual machines, other forms of cloud compute instances may be leveraged in accordance with some embodiments of the present disclosure. For example, elastic cloud compute ('EC2') instances offered in Amazon Web Services ('AWS')^{™} or other form of cloud compute instances may be utilized.

In Fig. 1, the VMs 104A-N may be used to support a container cluster. A container may be used to package an application and its dependencies so that an application can run consistently across different physical or virtual environments. In this particular case, the VMs 104A-N can operate as nodes within the container cluster to support the execution of a containerized application. In Fig. 1, each of the VMs 104A-N include pods 106A-N. Each pod 106A-N may represent the smallest unit of the cluster and may include one or more containers. Each container in a pod 106A-N may share resources and can represent different processes that work together to provide a cohesive service. Each pod 106A-N may be assigned a unique identified are assigned to a particular node. Each pod 106A-N may be ephemeral in nature and designed to be terminated or replaced at any time.

The standard execution environment 102 of Fig. 1 also includes a cluster extension 108. The cluster extension 108 can provide a platform or set of tools for adding additional functionality to a cluster, in some cases by enabling different extensions to be installed and managed on a cluster. Such extensions may be configured, for example, to extend monitoring capabilities within the cluster, to extend governance capabilities within the cluster, to extend developer tools within the cluster, to extend policy enforcement and compliance within the cluster, and for other purposes.

Fig. 1 also includes a standard cluster controller 110. The standard cluster controller 110 can include a variety of components that carry out various cluster management functions. The standard cluster controller 110 can be configured to provide core cluster services and to orchestrate application workloads in the cluster. The standard cluster controller 110 can include a variety of components including an API server to enable requests to the cluster from inside and outside of the cluster, components to help maintain the state of the cluster, components to manage configuration information, a scheduler to help make scheduling decisions for the cluster, components for selecting nodes for pods to run on, a management component to monitor node health and respond when nodes go down, and other components. As such, the standard cluster controller 110 can be embodied as an aggregation of software components and modules that carry out functions for managing a container cluster.

Fig. 1 also includes a secure execution environment 112. The secure execution environment 112 can include many similar components as the standard execution environment 102. For example, the secure execution environment 112 can include a plurality of virtual machines 114A-N that each support one or more pods 116A-N. The secure execution environment 112 can similarly include a cluster extension 118 as described above.

The secure execution environment 112 also includes secure cluster agents 120A-N. The secure cluster agents 120A-N are software modules executing in the secure execution environment 112. In some embodiments, all requests to access to the applications that are running in the cluster must go through the secure cluster agents 120A-N. Likewise, all requests to access to the virtual machines 114A-N, the pods 116A-N, or any other resources in the secure execution environment 112 must go through the secure cluster agents 120A-N. As such, the secure cluster agents 120A-N can at as an ingress controller for all data communications traffic that originates outside of the secure execution environment. The secure cluster agents 120A-N can be configured to only allow limited access by the standard cluster controller 110 and limited information about the images and containers running on the virtual machines 114A-N. Access to the applications running on the containers may be controlled by only allowing access through exposed ports, either at the cluster or endpoint level. In fact, the secure cluster agents 120A-N can even block external actors from performing managerial actions. For example, the secure cluster agents 120A-N may prevent Secure Shell ('SSH') access by all actors, including an administrator of the cluster. Although the example in Fig. 1 depicts an embodiment each VM 114A-N can include a node-level secure cluster agent 120A-N that is running on each VM 114AN, in other embodiments the secure software agent may be a module of software that sits above multiple VMs 114A-N. The remaining figures depict a secure software agent (also referred to as an agent) that sits above multiple VMs for ease of illustration, but such agents could be embodied as a collection of node-level agents in each of the embodiments illustrated in the remaining figures.

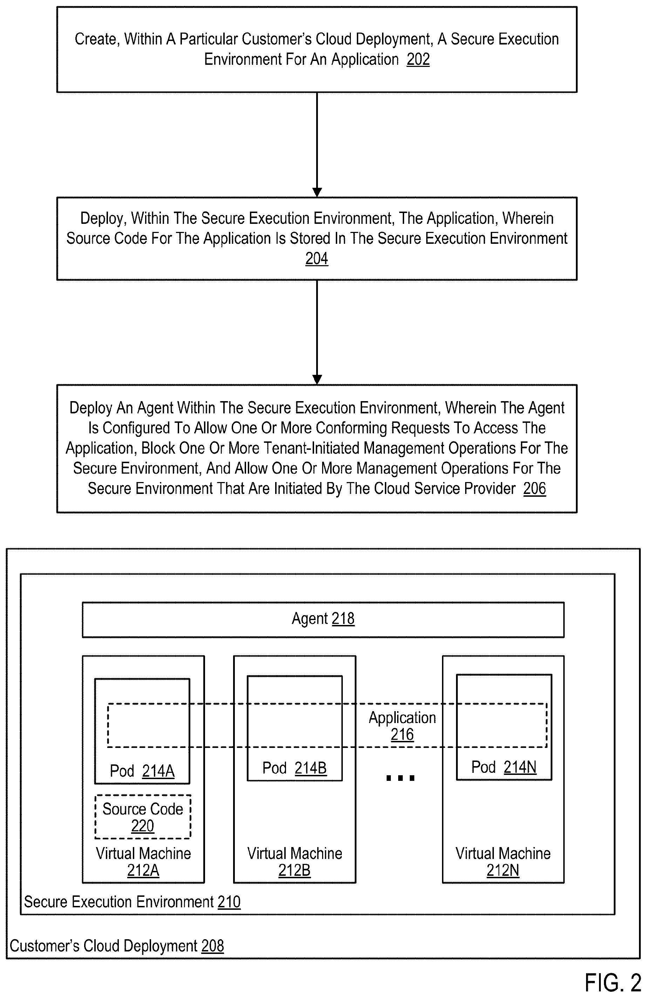

For further explanation, Fig. 2 sets forth a flow chart illustrating an example method for securely deploying applications by a cloud service provider in accordance with some embodiments. Fig. 2 includes creating 202, within a tenant's cloud deployment 208, a secure execution environment 210 for an application 216. The secure execution environment 210 may be similar to the secure execution environment 112 of Fig. 1, as the secure execution environment of Fig. 2 also includes a plurality of VMs 212A-N that each include a pod 214A-N. In the example depicted in Fig. 2, the secure execution environment 210 is used to execute application 216, and the source code 220 for such the application 216 is also stored in the secure execution environment 210.

Readers will appreciate that in this example the application 216 is a distributed application that is being executed across multiple VMs 212A-N and multiple pods 214A-N. In other embodiments, the application 216 may execute on a single VM or within a single pod. The application 216 of Fig. 2 may be a 'cloud-native' application. A 'cloud-native' application can be software that is specifically designed to run in cloud environments. Such applications can be built, for example, using a microservices architecture where services can be deployed, scaled, and maintained independently. Such applications may therefore be built to leverage cloud features like load balancing and auto-scaling, and may be built to run in containers that can help with load balancing and autoscaling through orchestration systems. Readers will appreciate that in other embodiments, however, the application 216 may be designed in some other way.

The secure execution environment 210 of Fig. 2 is created 202 in a tenant's cloud deployment 208. The tenant's cloud deployment 208 can refer to a isolated environment where the applications, data, and resources associated with a tenant reside. A tenant may be a business organization, a unit within a particular business, or other entity. In some embodiments, the tenant's cloud deployment 208 may be embodied one tenant within a multi-tenant cloud, as a virtual private cloud, or in some other way. Creating 202 a secure execution environment 210 in a tenant's cloud deployment 208 may be carried out by instantiating all of the components (e.g., VMs, pods) that are included in the secure execution environment 210, deploying the applications, setting up monitoring tools, and taking other steps. Many of these processes may be carried out through the use of some other infrastructure-as-code ('IaC') specification such as, for example, an AWS CloudFormation^{™} template, Terraform^{™} IaC template, an Azure Resource Manager ('ARM')^{™} templates, or similar automation resource. In other embodiments, the steps may be performed through the use of a cloud service provider's interfaces or in some other way.

Readers will appreciate that because the application 216 is deployed within a tenant's cloud deployment 208, the application 216 is not being deployed in an environment that is controlled by the developer or vendor of the application 216. That is, the developer or vendor of the application 216 is including their valuable intellectual property in the application 216 and then distributing the application 216 such that the developer or vendor of the application 216 no longer has the application 216 under their control. Instead, without taking the actions described here, the application 216 would be under the control of the customer (i.e., a tenant from the perspective of a cloud service provider) that purchased a license to the application 216. With the application 216 being under the control of the customer that purchased a license to the application 216, the intellectual property contained in the application 216 may be vulnerable for being misappropriated if not for deploying the application 216 in the secure execution environment 210 described in the present disclosure.

The secure execution environment 210 of Fig. 2 is managed exclusively by a cloud service provider. This arrangement ensures that only authorized personnel from the cloud service provider have administrative access to the secure execution environment 210. Consequently, any users not affiliated with the cloud service provider (which may be referred to herein as 'external users') are prevented from managing or altering the secure execution environment 210. This strict access control enhances the overall security and integrity of the secure execution environment 210, safeguarding it against unauthorized modifications and preventing unauthorized access to the source code 220 for the application 216 that is stored within the secure execution environment 210. For example, users of the application 216 may not have management access to the secure execution environment 210. Likewise, an administrator of a cluster that supports the execution of the application 216 may not have management access to the secure execution environment 210. The secure execution environment 210 may instead be managed by the cloud service provider's personnel and tools, such that functions like auto-scaling, handling failovers, applying updates, and performing other management operations to the secure execution environment 210 are handled exclusively by the cloud service provider.

Fig. 2 also includes deploying 204, within the secure execution environment 210, the application 216. Deploying 204 the application 216 within the secure execution environment 210 can include packaging the application 216 into a deployable format. In embodiments where the application 216 is executed in containers, this can include building an image for the application 216 and storing the image in a container directory such as Docker Hub^{™}, Azure Container Registry'^{™}, AWS Elastic Container Registry ('ECR')^{™}, or similar directory. In this example, deploying 204 the application 216 can also include managing the appropriate dependencies, configuring environment variables, and ultimately pushing the image to a container registry and deploying the image to a container orchestration service that leverages the cloud resources (e.g., VMs, networking) that have been set up when creating the secure execution environment 210.

In Fig. 2, the source code 220 for the application 216 is stored in the secure execution environment 210. The source code 220 depicted in Fig. 2 can be embodied in a variety of ways, including as uncompiled source code. Such uncompiled source code can be human-readable code, written in some programming language, that has not yet been transformed into machine code such as a binary or executable. The uncompiled source code may be written in programming languages such as, for example, Python, Java, C++, or similar. In order to execute, the uncompiled source code may require compilation or may be written in an interpreted language where an interpreter is used to execute the source code without compiling it first. Readers will appreciate that because the source code 220 for the application 216 is stored in the secure execution environment 210, if unrestricted access were given to the secure execution environment 210, anyone with such access could obtain the source code 220 and potentially misappropriate the intellectual property contained in such source code 220.

Fig. 2 also includes deploying 206 an agent 218 within the secure execution environment 210. The agent 218 of Fig. 2 may be similar to the secure cluster agents 120A-N of Fig. 1 as the agent 218 of Fig. 2 is configured to allow conforming requests to the access the application 216. Readers will appreciate that requests to access the application 216 may be issued by users of the application 216 as part of an attempt by a user to perform an action or use a feature of the application 216. The way a request is issued can vary depending on the type of application (e.g., web app, desktop app, mobile app), but the process can generally include the user interacting with a user interface associated with the application 216 (e.g., clicking buttons, filling forms). This interaction can trigger client-side logic to send a request to server-side logic, which is this example resides within the tenant's cloud deployment 208.

In Fig. 2, a request to the access the application 216 is considered to be a 'conforming' request if it adheres to various requirements specified by the developer of the application 216. For example, the source code 220 for the application 216 may specify that requests should be directed to a particular port and formatted according to some specification. If the request is received via a different port or formatted in a way that does not adhere to the specification, the request may be denied. If the request is a conforming request, however, the request may be carried out by having the application 216 perform some function in response to the request. Readers will appreciate that by placing such restrictions on how the application 216 is accessed, information associated with the application 216 such as the application's source code 220 may be better protected as externally initiated attempts to access resources with the secure execution environment 210 may be strictly controlled.

The agent 218 of Fig. 2 is further configured to block tenant-initiated management operations for the secure execution environment 210, and further configured to allow management operations for the secure execution environment 210 that are initiated by the cloud service provider. A management operation for the secure execution environment 210 can be any request to access information within the secure execution environment 210 that is not part of a request to access the application 216. In fact, a management operation can even include attempts to simply initiate a communication session with a resource within the secure execution environment 210. For example, in some embodiments an attempt to initiate an SSH session with one or more resources in the secure execution environment 210 is a management operation for the secure execution environment 210. Likewise, in some embodiments an attempt to obtain an image or source code 220 associated with the application 216 is a management operation for the secure execution environment 210. In some embodiments, an attempt to alter one or more virtual machines 212A-N or pods 214A-N within the secure execution environment 210 is a management operation for the secure execution environment 210. In some embodiments, other attempted accesses may similarly be a management operation for the secure execution environment 210.

Readers will appreciate that the agent 218 may block some management operations for the secure execution environment 210 and allow other management operations for the secure execution environment 210. For example, if a management operation for the secure execution environment 210 is initiated by the cloud service provider, the agent 218 may allow the management operation to be performed. If the management operation is issued by users that are not affiliated with cloud service provider, however, the agent 218 may block the management operation. For example, the agent 218 may block management operations that are initiated by the tenant or any of their personnel (e.g., a tenant-side administrator), initiated by users of an application, and so on. The agent 218 may block such management operations, for example, by receiving any request to perform a management operation, identifying the originator of the request, and discarding any request that is not initiated by the cloud service provider. As such, the agent 218 may act as a filter that receives requests to perform management operations that can prevent such operations from being received by the entities that actually service those requests. In such an embodiment, the secure execution environment may be configured in such a way that all requests to perform management operations are routed to the agent 218 rather than being directly routed to the entities that actually service those requests.

Readers will appreciate that in some embodiments, the application 216 and its associated intellectual property may further be protected in a variety of ways. For example, the VMs 212AN may also be configured to utilize end-to-end data encryption techniques that include encrypting the contents of persistent storage that is used to store data associated with the application 216 (including images, source code, and application data), as well as encrypting data exchanged between containers and external systems. In some embodiments, memory encryption may also be leveraged to encrypt the contents of memory within the VMs 212A-N to prevent any reading or tampering of data. In some embodiments, access to the secure VMs 212A-N in the secure execution environment 210 is not allowed, as all users (including administrators that are not affiliated with the cloud service provider) are locked out. As such, the VMs 212A-N and other resources within the secure execution environment 210 may be fully managed by the cloud service provider. The cloud service provider can therefore handle updates, scaling, troubleshooting, and other management functions.

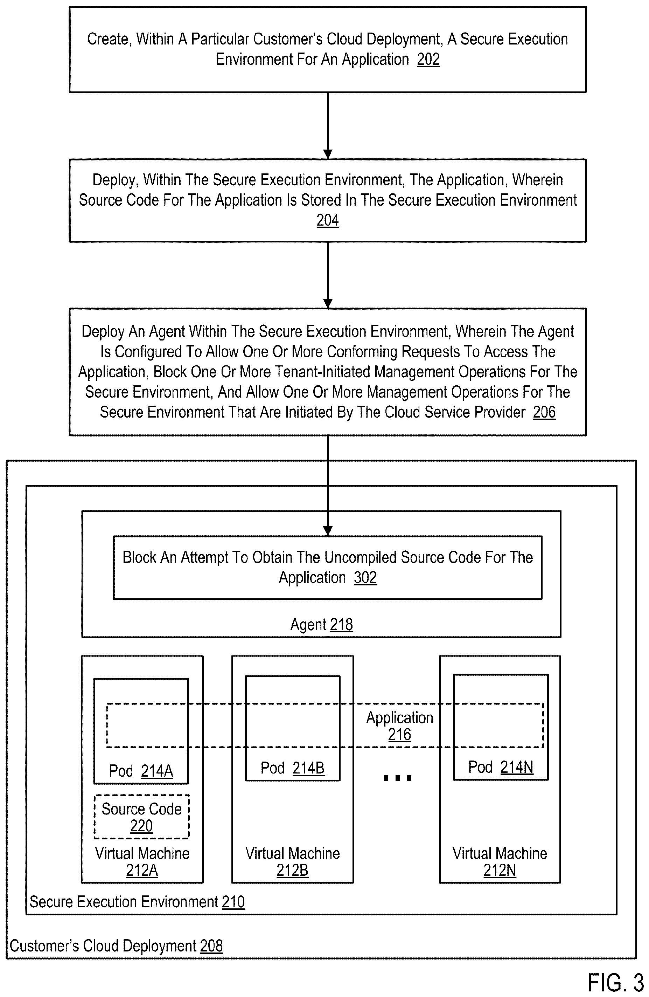

For further explanation, Fig. 3 sets forth a flow chart illustrating an example method for securely deploying applications by a cloud service provider in accordance with some embodiments. Fig. 3 includes blocking 302, by the agent 218, an attempt to obtain the uncompiled source code 220 for the application 216. Blocking 302 an attempt to obtain the uncompiled source code 220 for the application 216 may be carried out, for example, by the agent 218 preventing the establishment of communication channels that are necessary for a user to access the uncompiled source code 220, by securing the uncompiled source code 220 by preventing access to the underlying storage that contains the uncompiled source code 220, by preventing access to any image that may contain the uncompiled source code 220, or in some other way.

Consider an example in which the application 216 is executing within a container cluster and the uncompiled source code 220 can be found in a container image. In such an example, an attempt to obtain the uncompiled source code 220 for the application 216 may be carried out by accessing the container cluster (e.g., via a management interface) and identifying which pod or container is running the application 216. For example, a cluster administrator or other user may search for the pod or container that is running the application 216 via a command line interface such as a Bourne Again Shell ('Bash'), where the cluster can initiate the appropriate command (e.g., "get pods") with the application name provided as a parameter to the command. Once the pod or container that is running the application 216 has been identified, a request (e.g., an "exec" command) to access the container shell may be initiated and files such as the source code 220 may be inspected. In such an example, the agent 218 may block 302 such an attempt to obtain the uncompiled source code 220 for the application 216, for example, by blocking the ability to initiate a Bash session, SSH session, or any other necessary session to access the VM 212A-N or the pod 214A-N.

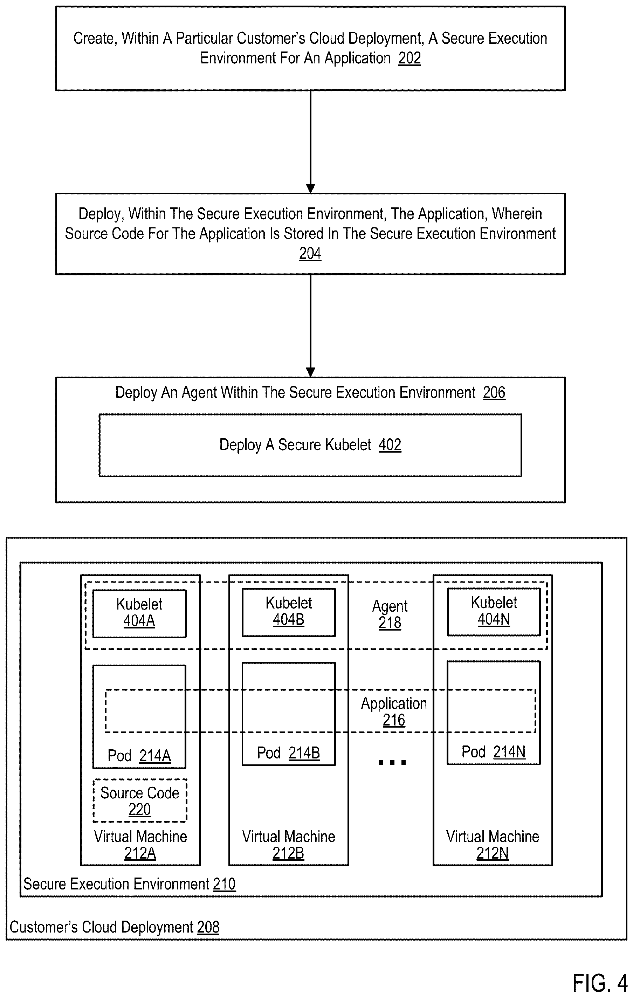

For further explanation, Fig. 4 sets forth a flow chart illustrating an example method for securely deploying applications by a cloud service provider in accordance with some embodiments. In Fig. 4, deploying 206 the agent 218 within the secure execution environment 210 can include deploying 402 a secure kubelet. A kubelet is a component in a Kubernetes cluster that runs on each node (e.g., on each virtual machine 212A-N in the secure execution environment 210) and is responsible for managing various aspects of the containers that are running on that node. The kubelet's responsibilities include managing the lifecycle of containers on its node by starting, stopping, and restarting containers as needed. The kubelet's responsibilities also include monitoring the health and status of each container and reporting the status of the node and its containers back to the control plane. The kubelet's responsibilities also include communicating with the Kubernetes API server to receive instructions about which pods should run on the node. The kubelet's responsibilities also include managing node-level resources and ensuring containers have the necessary resources to run, based on the resource limits and requests defined in the pod specifications. The kubelet relies on a container runtime to run the actual containers and can be responsible for instructing the container runtime to pull images, start, stop, and manage containers. In Fig. 4, kubelets 404A-N are illustrated as being deployed 402 on each virtual machine 212A-N in the secure execution environment 210, such that the aggregation of kubelets 404A-N may be collectively viewed as the agent 218 in the secure execution environment 210 that performs the agent functions described in the present disclosure. In such an embodiment, each kubelet 404A-N may individually perform the agent functions described in the present disclosure with respect to its particular VM 212A-N.

In some embodiments, the kubelet can be responsible for blocking requests directed to management operations for the secure execution environment 210. The kubelet can be responsible for blocking requests directed to management operations for the secure execution environment 210, for example, by restricting access to the pods and containers that are executing within the secure execution environment 210. More specifically, the specialized kubelet will block API calls that request access to the containers and pods in the secure execution environment 210, the specialized kubelet will prevent SSH sessions with containers and pods in the secure execution environment 210, and the specialized kubelet can implement other actions to secure the application 216 and its underlying source code 220. The kubelet may be configured, for example, to block requests directed to management operations for the secure execution environment 210 that are initiated by entities that are not affiliated with the cloud service provider. The kubelet may, however, allow requests directed to management operations for the secure execution environment 210 that are initiated by the cloud service provider.

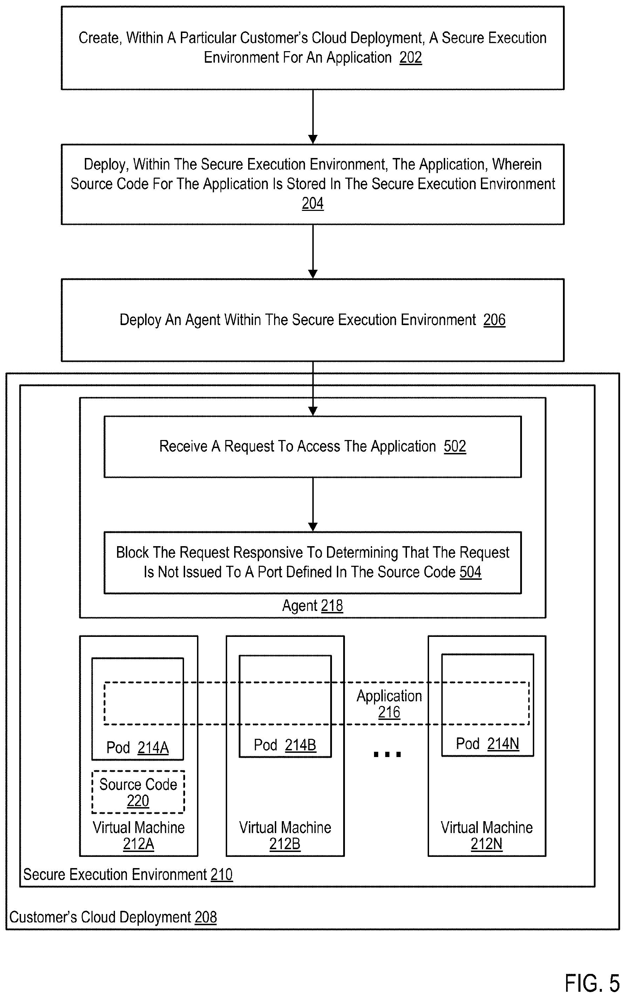

For further explanation, Fig. 5 sets forth a flow chart illustrating an example method for securely deploying applications by a cloud service provider in accordance with some embodiments. The example in Fig. 5 includes receiving 502 a request to access the application 216. The request to access the application 216 may be received 502, directly or indirectly, from a user of the application 216 as part of an attempt by a user to perform an action or use a feature of the application 216. Because the application 216 is hosted by a cloud service provider, the request to access the application 216 may be initiated, for example, by a user attempting to access a Uniform Resource Locator ('URL') that is associated with the application 216 via a web browser or other appropriate client-side application. In this example, a secure connection may be established and a series of Hypertext Transfer Protocol Secure ('HTTPS') requests and responses may be exchanged to facilitate user access to the application 216. In this example, the HTTPS requests issued by the client-side application may represent the request to access the application 216 that is received 502. In some embodiments, there may be some processing of the HTTPS request that generates a differently formatted request that ultimately is passed to the application 216. As such, receiving 502 the request may encompass the entire process - from receiving the initial HTTPS request, processing it as necessary, to routing it to application 216 - depending on the specific architecture and implementation of the application 216.

The example in Fig. 5 also includes blocking 504 the request responsive to determining that the request is not issued to a port defined in the source code 220. As described above, as part of an effort to control the way that their applications 216 are accessed when those applications are deployed in a customer's environment, the developer or vendor of an application 216 may require that the application 216 be accessed in a certain way. For example, the developer or vendor of an application 216 may require that the application 216 be accessed via predefined ports that are specifically established to receive confirming requests to access the application 216 and reject all other incoming communications. The specific ports that the application 216 must be accessed through can be specified, for example, in the source code 220 itself, in a configuration file that is associated with the application 216, or in some other resource that is defined prior to deploying the application 216 (and defined by either the developer/vendor of the application or exclusively by the cloud service provider).

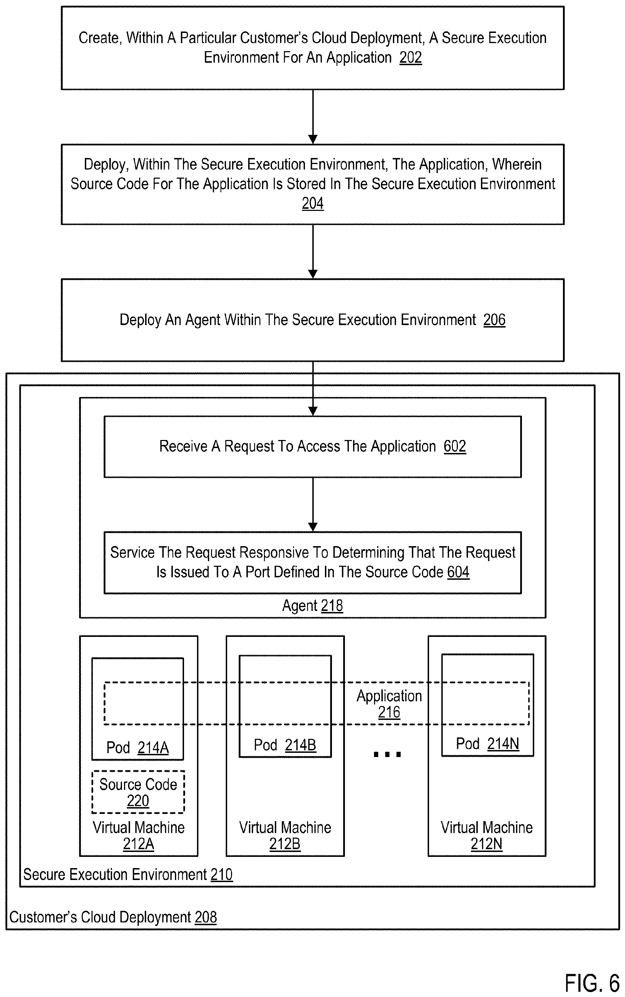

For further explanation, Fig. 6 sets forth a flow chart illustrating an example method for securely deploying applications by a cloud service provider in accordance with some embodiments. The example method depicted in Fig. 6 includes receiving 602 a request to access the application 216. Receiving 602 a request to access the application 216 can be carried out as described above in Fig. 5.

Fig. 6 also includes allowing 604 the request responsive to determining that the request is issued to a port defined in the source code 220. Allowing 604 the request to access the application 216 may be carried out, for example, by allowing the request to be routed by entities (e.g., services, microservices) that perform any steps that are necessary to format the request appropriately and having the application 216 process the request, including initiating the appropriate response. For example, an HTTPS response may be sent to the client-side application that contains the result of the application 216 performing some task.

In some embodiments, the source code 220 for the application 216 includes metadata indicating that the application 216 must be executed in a secure execution environment 210. Such metadata may be embodied, for example, as a variable or flag whose value can be used to determine whether the application 216 must be executed in a secure execution environment 210. This value can be set by the developer or vendor of the application and may not be changed. In such a way, the developer or vendor of the application can have a mechanism that they can use to specify that their application 216 should not be deployed in a manner that could potentially expose their intellectual property to being misappropriated.

Readers will appreciate that while some embodiments are described where information such as a port that must be used to access an application or metadata indicating that the application must be executed in a secure execution environment 210 are contained in the source code 220 itself, in other embodiments such information may reside elsewhere. For example, this information may reside in a configuration file for the application 216. Likewise, this information may be provided by the developer or vendor as part of listing the application 216 in a marketplace.

In some embodiments, data associated with the application 216 is encrypted at rest and wherein data communications associated with the application 216 are encrypted. Encrypting data at rest involves encrypting data that is stored using an encryption algorithm (e.g., AES, RSA) before it is written to persistent storage. Cloud service providers may offer encryption at rest by default for services like object storage (S3, Google Cloud Storage^{™}), databases (RDS, Azure SQL^{™}), or in other situations. Likewise, data communications associated with the application 216 are encrypted, especially data communications between the application 216 and external systems such as a client device that is accessing the application 216. In such embodiments, when data is transmitted between two points, encryption algorithms are applied to the data before it is sent. The receiving party subsequently decrypts the data back into its original form so it can be processed or understood.

Readers will appreciate that although many of the steps are described above as occurring within some order, not ordering is required unless explicitly stated otherwise. As one example of steps that can occur in a different order, some embodiments may involve deploying 206 an agent 218 within a secure execution environment prior to deploying 204 the application 216 within the secure execution environment 210. As one example of steps that can occur in a different order, some embodiments may involve blocking 706 the application 216 from being deployed in standard execution environments within the tenant's cloud deployment 208 prior to deploying 204 the application 216 within the secure execution environment 210. In other embodiments, other orderings may be implemented.

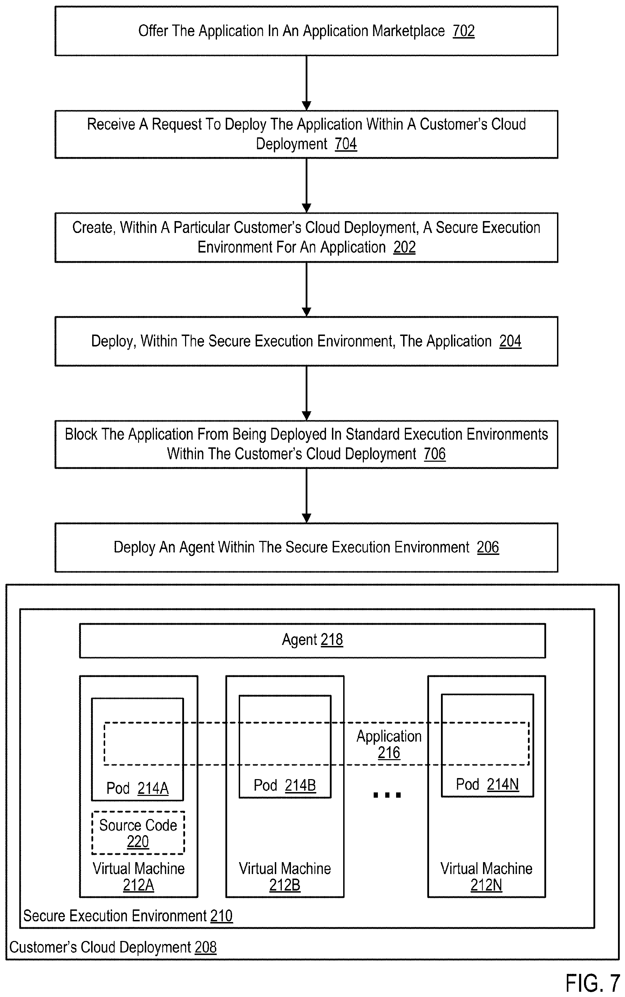

For further explanation, Fig. 7 sets forth a flow chart illustrating an example method for securely deploying applications by a cloud service provider in accordance with some embodiments. Fig. 7 includes offering 702 the application 216 in an application marketplace. The application marketplace is a platform where users can purchase software applications and services configured to run on that cloud service provider's infrastructure. The application marketplace can be used to find software solutions that integrate with the cloud service provider's platform. Examples of such application marketplaces can include Microsoft Azure Marketplace^{™}, AWS Marketplace^{™}, or other similar marketplace. Offering 702 the application 216 in an application marketplace may be carried out as the result of the application developer or vendor submitting the application (or a container image with the application) with the cloud service's provider, who subsequently includes the application 216 in its marketplace.

Fig. 7 also includes receiving 704 a request to deploy the application 216 within a tenant's cloud deployment 208. Receiving 704 a request to deploy the application 216 within a tenant's cloud deployment 208 may be carried out as part of a tenant's attempt to purchase the application 216 via the application marketplace. Once the tenant has purchased the application 216, the marketplace can be configured to only allows tenant's clusters that purchased the solution to download the image using the tenant's identity for authentication.

Fig. 7 also includes blocking 706 the application 216 from being deployed in standard execution environments within the tenant's cloud deployment 208. In such embodiments, the application marketplace may be configured to only allow authorized nodes (i.e., those nodes that are monitored by an agent 218, have a secure kubelet installed, or are otherwise part of a secure execution environment) to download the application 216 or container images that include the application 216. As such, blocking 706 the application 216 from being deployed in standard execution environments within the tenant's cloud deployment may be carried out, for example, by the application marketplace blocking the download of the source code 220 or an image containing the source code 220 to any virtual machines 212A-N that are not part of a secure execution environment. In other embodiments, blocking 706 the application 216 from being deployed in standard execution environments within the tenant's cloud deployment 208 may be carried out in other ways. For example, the VMs 212A-N may be configured such that they cannot download source code 220 or images from the application marketplace without having the secure kubelet installed. In other embodiments, blocking 706 the application 216 from being deployed in standard execution environments within the tenant's cloud deployment 208 can be carried out by different actors or using different enforcement mechanisms.

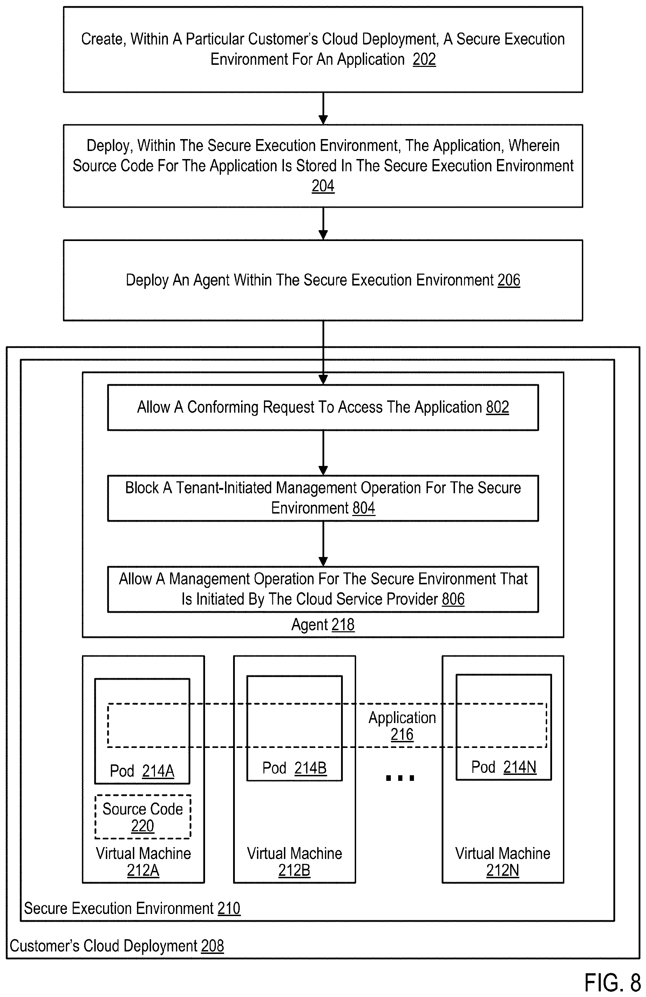

For further explanation, Fig. 8 sets forth a flow chart illustrating an example method for securely deploying applications by a cloud service provider in accordance with some embodiments. The example in Fig. 8 includes allowing 802, by the agent 218, a conforming request to access the application 216. The agent 218 may allow 802 a conforming request to access the application 216 as described above, including by determining whether the request to access the application 216 is a conforming request and passing such a confirming request to the application 216 (or otherwise enabling the request to be received by the application 216).

The example in Fig. 8 also includes blocking 804, by the agent 218, a tenant-initiated management operation for the secure execution environment 210. The agent 218 may block 804 a tenant-initiated management operation for the secure execution environment 210 (or any other management operation initiated by an entity that is not affiliated with the cloud service provider) as described above, including discarding such management operations or otherwise preventing the management operation from being received by one or more entities that service such operations.

The example in Fig. 8 also includes allowing 806, by the agent 218, a management operation for the secure environment that is initiated by the cloud service provider. The agent 218 may allow 806 a management operation for the secure environment that is initiated by the cloud service provider as described above, include by determining whether the management operation was initiated by the cloud service provider and passing such a management operation to one or more entities that service such operations (or otherwise enabling the request to be received by the one or more entities that service such operations).

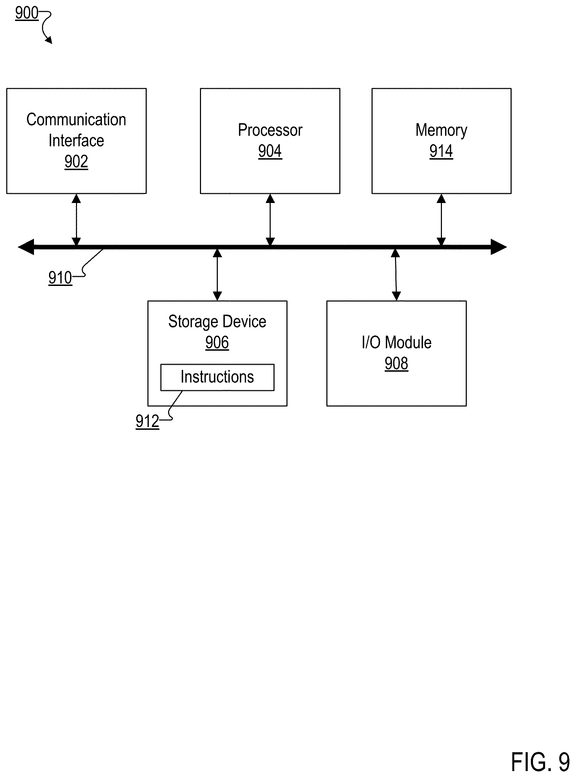

For further explanation, the sections included below provide some details regarding technologies that may be used to support securely deploying cloud-native applications. For example, Fig. 9 sets forth an example of a computing device that may be used for some portion of securely deploying applications by a cloud service provider in accordance with some embodiments. As an additional example of technologies that may be used to support accelerating queries, Fig. 9 sets forth a block diagram of a cloud service provider service architecture in accordance with some embodiments of the present disclosure.

For further explanation, Fig. 9 illustrates an exemplary computing device 900 that may be specifically configured to perform one or more of the processes described herein. As shown in Fig. 9, computing device 900 may include a communication interface 902, a processor 904, a storage device 906, an input/output (I/O) module 908, and computer memory 914 communicatively connected one to another via a communication infrastructure 910. While an exemplary computing device 900 is shown in Fig. 9, the components illustrated in Fig. 9 are not intended to be limiting. Additional or alternative components may be used in other embodiments. Components of computing device 900 shown in Fig. 9 will now be described in additional detail.

Communication interface 902 may be configured to communicate with one or more computing devices. Examples of communication interface 902 include, without limitation, a wired network interface (such as a network interface card), a wireless network interface (such as a wireless network interface card), a modem, an audio/video connection, and any other suitable interface.

Processor 904 generally represents any type or form of processing unit capable of processing data and/or interpreting, executing, and/or directing execution of one or more of the instructions, processes, and/or operations described herein. Processor 904 may perform operations by executing computer-executable instructions 912 (e.g., an application, software, code, and/or other executable data instance) stored in storage device 906.

Storage device 906 may include one or more data storage media, devices, or configurations and may employ any type, form, and combination of data storage media and/or device. For example, storage device 906 may include, but is not limited to, any combination of non-volatile media and/or volatile media. Electronic data, including data described herein, may be temporarily and/or permanently stored in storage device 906. For example, data representative of computer-executable instructions 912 configured to direct processor 904 to perform any of the operations described herein may be stored within storage device 906. In some examples, data may be arranged in one or more databases residing within storage device 906.

I/O module 908 may include one or more I/O modules configured to receive user input and provide user output. I/O module 908 may include any hardware, firmware, software, or combination thereof supportive of input and output capabilities. For example, I/O module 908 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 908 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 900.

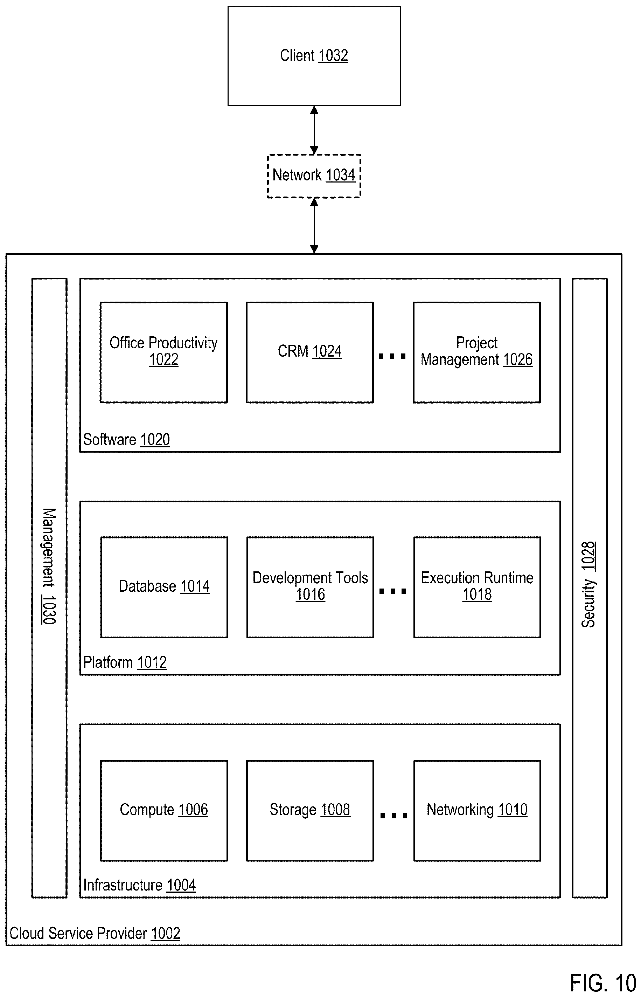

For further explanation and as an additional example of a supporting technology for securely deploying applications by a cloud service provider, Fig. 10 sets forth a block diagram of a cloud service provider service architecture in accordance with some embodiments. The cloud service provider can deliver a variety resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others.

Fig. 10 depicts an embodiment where software 1020 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 10, as examples of software 1020 that can be delivered as-a-service, the illustrated embodiment includes office productivity 1022 software, customer relationship management ('CRM') 1024 software, and project management 1026 software. The office productivity 1022 software can include applications designed to facilitate common business and personal tasks, including word processing applications, applications for spreadsheet creation, presentation design applications, and many others. The CRM 1024 software can include applications for managing a business organization's relationships and interactions with customers and potential customers. The project management 1026 software can include applications designed to help teams plan, organize, and manage projects efficiently by facilitating collaboration and tracking the progress of projects. Readers will appreciate that in other embodiments, other types of software may be delivered using a SaaS model.

Fig. 10 depicts an embodiment where platforms 1012 can be delivered as a service. Platform-as-a-service ('PaaS') is a model that provides cloud customers with platform resources that they can use to develop, run, and manage applications without the complexity of such deploying and managing such infrastructure on their own. In Fig. 10, as examples of platform 1012 resources that can be delivered as-a-service, the illustrated embodiment includes database 1014 services, development tools 1016 services, and execution runtime 1018 services. The database 1014 services can be used to provide access to databases without management overhead for the user as the cloud service provider manages the provisioning, scaling, and maintenance of the databases. The development tools 1016 services can provide developers with tools to design, develop, test, and deploy applications without needing to manage the underlying infrastructure. The execution runtime 1018 services can provide environments where applications or other forms of computer program code can be executed, including services to scale the execution environment. Readers will appreciate that in other embodiments, other platform resources may be delivered using a PaaS model.

Fig. 10 depicts an embodiment where infrastructure 1004 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 10, as examples of infrastructure 1004 resources that can be delivered as-a-service, the illustrated embodiment includes compute 1006 services, storage 1008 services, and networking 1010 services. The compute 1006 services can be used to provide on-demand access to computational resources such as VMs, containers, and serverless functions, where the cloud service provider manages the provisioning, scaling, and maintenance of such resources. The storage 1008 services can provide storage resources that can be used to store and access data, without the need for customers to purchase and manage on-premises physical storage resources. The networking 1010 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 10 also provides management 1030 resources. The management 1030 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 10 also provides security 1028 resources. The security 1028 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Readers will appreciate that although the paragraphs above describe embodiments where a software vendor or software developer has their applications deployed in a secure execution environment to avoid leakage of their intellectual property (or for other reasons), other entities may also benefit from the ability to create secure execution environments. For example, secure execution environments may be used by governmental agencies to significantly restrict access to software applications that are executing in the secure execution environments, and also to restrict access to potentially sensitive data that is being processed by such applications. Governmental agencies may have additional motivations to use secure execution environments or may receive other benefits. Likewise, any other entity that has proprietary software may benefit from deploying their software in secure execution environments. Entities that have software that runs critical systems may similarly benefit from deploying their software in secure execution environments to guard against attacks that could compromise critical systems. Readers will appreciate that other users may also benefit from deploying software in the secure execution environments described above for additional or alternative reasons.

Advantages and features of the present disclosure can be further described by the following statements:
1. A method of securely deploying applications by a cloud service provider , including: creating, within a tenant's cloud deployment, a secure execution environment for an application,; deploying, within the secure execution environment, the application, wherein source code for the application is stored in the secure execution environment; and deploying an agent within the secure execution environment, wherein the agent is configured to allow conforming requests to access the application, block one or more tenant-initiated management operations for the secure environment, and allow one or more management operations for the secure environment that are initiated by the cloud service provider.
2. A method of statement 1 wherein the secure execution environment includes uncompiled source code for the application, the method further comprising blocking, by the agent, an attempt to obtain the uncompiled source code for the application.
3. A method of statement 2 or statement 1 wherein deploying the agent within the secure execution environment further comprises deploying a secure kubelet.
4. A method of statement 3, statement 2, or statement 1 wherein source code for the application includes metadata indicating that the application must be executed in a secure execution environment.
5. A method of statement 4, statement 3, statement 2, or statement 1 wherein data associated with the application is encrypted at rest and wherein data communications associated with the application are encrypted.
6. A method of statement 5, statement 4, statement 3, statement 2, or statement 1 further comprising: receiving a request to access the application; and blocking the request responsive to determining that the request is not issued to a port defined in the source code.
7. A method of statement 6, statement 5, statement 4, statement 3, statement 2, or statement 1 further comprising: receiving a request to access the application; and allowing the request responsive to determining that the request is issued to a port defined in the source code.
8. A method of statement 6, statement 5, statement 4, statement 3, statement 2, or statement 1 further comprising: offering the application in an application marketplace; receiving a request to install the application within a tenant's cloud deployment; and installing the application only within secure execution environments with the tenant's cloud deployment.
9. A method of statement 8, statement 7, statement 6, statement 5, statement 4, statement 3, statement 2, or statement 1 further comprising blocking the application from being installed in standard execution environments within the tenant's cloud deployment.
10. An apparatus comprising a memory and one or more processing devices, operatively coupled to the memory, the one or more processing devices configured to: create, within a tenant's cloud deployment, a secure execution environment for an application; deploy, within the secure execution environment, the application, wherein source code for the application is stored in the secure execution environment; deploy an agent within the secure execution environment; allow, by the agent, a conforming request to access the application; block, by the agent, a tenant-initiated management operation for the secure environment; and allow, by the agent, a management operation for the secure environment that is initiated by the cloud service provider.
11. An apparatus of statement 10 wherein the secure execution environment includes uncompiled source code for the application, and the one or more processing devices are further configured to block, by the agent, an attempt to obtain the uncompiled source code for the application.
12. An apparatus statement 11 or statement 10 wherein to deploy the agent within the secure execution environment, the one or more processing devices are further configured to deploy one or more secure kubelets.
13. An apparatus of statement 12, statement 11, or statement 10 wherein source code for the application includes metadata indicating that the application must be executed in a secure execution environment.
14. An apparatus of statement 13, statement 12, statement 11, or statement 10 wherein data associated with the application is encrypted at rest and wherein data communications associated with the application are encrypted.
15. An apparatus of statement 14, statement 13, statement 12, statement 11, or statement 10 wherein the one or more processing devices are further configured to: receive a request to access the application; and block the request responsive to determining that the request is not issued to a port specified in a configuration for the application.
16. An apparatus of statement 15, statement 14, statement 13, statement 12, statement 11, or statement 10 wherein the one or more processing devices are further configured to: receive a request to access the application; and allow the request responsive to determining that the request is issued to a port specified in a configuration for the application.
17. A non-transitory computer readable storage medium storing instructions which, when executed, cause a processing device to: create, within a tenant's cloud deployment, a secure execution environment for an application; deploy an agent within the secure execution environment; allow, by the agent, a conforming request to access the application; allow, by the agent, a management operation for the secure environment that is initiated by the cloud service provider; and block, by the agent, a management operation for the secure environment that is initiated by an entity that is not affiliated with the cloud service provider.
18. The non-transitory computer readable storage medium of statement 17 wherein the secure execution environment includes uncompiled source code for the application, and the instructions, when executed, further cause the processing device to block, by the agent, an attempt to obtain the uncompiled source code for the application.
19. The non-transitory computer readable storage medium of statement 19 or statement 18 wherein to deploy the agent within the secure execution environment, and the instructions, when executed, further cause the processing device to deploy one or more secure kubelets.
20. The non-transitory computer readable storage medium of statement 19, statement 18, or statement 17 wherein a configuration for the application includes metadata indicating that the application must be executed in a secure execution environment.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud service provider, in one or more event-driven compute services such as those offered by a cloud service provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.
The following is a list of further preferred embodiments of the invention:
Embodiment 1. A method of securely deploying applications by a cloud service provider, the method comprising:
   creating, within a tenant's cloud deployment, a secure execution environment for an application;
   deploying, within the secure execution environment, the application, wherein source code for the application is stored in the secure execution environment; and
   deploying an agent within the secure execution environment, wherein the agent is configured to:
      allow one or more conforming requests to access the application;
      block one or more tenant-initiated management operations for the secure environment; and
      allow one or more management operations for the secure environment that are initiated by the cloud service provider.
Embodiment 2. The method of embodiment 1 wherein the secure execution environment includes uncompiled source code for the application, the method further comprising blocking, by the agent, an attempt to obtain the uncompiled source code for the application.
Embodiment 3. The method of embodiment 1 wherein deploying the agent within the secure execution environment further comprises deploying one or more secure kubelets.
Embodiment 4. The method of embodiment 1 wherein source code for the application includes metadata indicating that the application must be executed in a secure execution environment.
Embodiment 5. The method of embodiment 1 wherein data associated with the application is encrypted at rest and wherein data communications associated with the application are encrypted.
Embodiment 6. The method of embodiment 1 further comprising:
   receiving a request to access the application; and
   blocking the request responsive to determining that the request is not issued to a port defined in the source code.
Embodiment 7. The method of embodiment 1 further comprising:
   receiving a request to access the application; and
   allowing the request responsive to determining that the request is issued to a port defined in the source code.
Embodiment 8. The method of embodiment 1 further comprising:
   offering the application in an application marketplace;
   receiving a request to deploy the application within a tenant's cloud deployment; and
   blocking the application from being deployed in standard execution environments within the tenant's cloud deployment.
Embodiment 9. An apparatus for securely deploying applications by a cloud service provider, comprising:
   a memory; and
   one or more processing devices, operatively coupled to the memory, the one or more processing devices configured to:
      create, within a tenant's cloud deployment, a secure execution environment for an application;
      deploy, within the secure execution environment, the application;
      deploy an agent within the secure execution environment;
      allow, by the agent, a conforming request to access the application;
      block, by the agent, a tenant-initiated management operation for the secure environment; and
      allow, by the agent, a management operation for the secure environment that is initiated by the cloud service provider.
Embodiment 10. The apparatus of embodiment 9 wherein the secure execution environment includes uncompiled source code for the application, and the one or more processing devices are further configured to block, by the agent, an attempt to obtain the uncompiled source code for the application.
Embodiment 11. The apparatus of embodiment 9 wherein to deploy the agent within the secure execution environment, the one or more processing devices are further configured to deploy one or more secure kubelets.
Embodiment 12. The apparatus of embodiment 9 wherein source code for the application includes metadata indicating that the application must be executed in a secure execution environment.
Embodiment 13. The apparatus of embodiment 9 wherein data associated with the application is encrypted at rest and wherein data communications associated with the application are encrypted.
Embodiment 14. The apparatus of embodiment 9 wherein the one or more processing devices are further configured to:
   receive a request to access the application; and
   block the request responsive to determining that the request is not issued to a port specified in a configuration for the application.
Embodiment 15. The apparatus of embodiment 9 wherein the one or more processing devices are further configured to:
   receive a request to access the application; and
   allow the request responsive to determining that the request is issued to a port specified in a configuration for the application.
Embodiment 16. A non-transitory computer readable storage medium storing instructions which, when executed, cause a processing device to:
   create, within a tenant's cloud deployment, a secure execution environment for an application;
   deploy an agent within the secure execution environment;
   allow, by the agent, a conforming request to access the application;
   allow, by the agent, a management operation for the secure environment that is initiated by a cloud service provider; and
   block, by the agent, a management operation for the secure environment that is initiated by an entity that is not affiliated with the cloud service provider.
Embodiment 17. The non-transitory computer readable storage medium of embodiment 16 wherein the secure execution environment includes uncompiled source code for the application, and the instructions, when executed, further cause the processing device to block, by the agent, an attempt to obtain the uncompiled source code for the application.
Embodiment 18. The non-transitory computer readable storage medium of embodiment 16 wherein to deploy the agent within the secure execution environment, and the instructions, when executed, further cause the processing device to deploy one or more secure kubelets.
Embodiment 19. The non-transitory computer readable storage medium of embodiment 16 wherein a configuration for the application includes metadata indicating that the application must be executed in a secure execution environment.
Embodiment 20. The non-transitory computer readable storage medium of embodiment 16 wherein the instructions, when executed, further cause a processing device to:
   receive a request to access the application; and
   block the request responsive to determining that the request is not issued to a port specified in a configuration for the application.

## Claims

1. A method of securely deploying applications by a cloud service provider, the method comprising:
creating, within a tenant's cloud deployment, a secure execution environment for an application;
deploying, within the secure execution environment, the application, wherein source code for the application is stored in the secure execution environment; and
deploying an agent within the secure execution environment, wherein the agent is configured to:
allow one or more conforming requests to access the application;
block one or more tenant-initiated management operations for the secure environment; and
allow one or more management operations for the secure environment that are initiated by the cloud service provider.

2. The method of claim 1 wherein the secure execution environment includes uncompiled source code for the application, the method further comprising blocking, by the agent, an attempt to obtain the uncompiled source code for the application.

3. The method of claim 1 or 2 wherein deploying the agent within the secure execution environment further comprises deploying one or more secure kubelets.

4. The method of one of claims 1 to 3 wherein source code for the application includes metadata indicating that the application must be executed in a secure execution environment.

5. The method of one of claims 1 to 4 wherein data associated with the application is encrypted at rest and wherein data communications associated with the application are encrypted.

6. The method of one of claims 1 to 5 further comprising:
receiving a request to access the application; and
blocking the request responsive to determining that the request is not issued to a port defined in the source code.

7. The method of one of claims 1 to 5 further comprising:
receiving a request to access the application; and
allowing the request responsive to determining that the request is issued to a port defined in the source code.

8. The method of one of claims 1 to 5 further comprising:
offering the application in an application marketplace;
receiving a request to deploy the application within a tenant's cloud deployment; and
blocking the application from being deployed in standard execution environments within the tenant's cloud deployment.

9. An apparatus for securely deploying applications by a cloud service provider, comprising:
a memory; and
one or more processing devices, operatively coupled to the memory, the one or more processing devices configured to:
create, within a tenant's cloud deployment, a secure execution environment for an application;
deploy, within the secure execution environment, the application;
deploy an agent within the secure execution environment;
allow, by the agent, a conforming request to access the application;
block, by the agent, a tenant-initiated management operation for the secure environment; and
allow, by the agent, a management operation for the secure environment that is initiated by the cloud service provider.

10. The apparatus of claim 9 wherein the secure execution environment includes uncompiled source code for the application, and the one or more processing devices are further configured to block, by the agent, an attempt to obtain the uncompiled source code for the application.

11. The apparatus of claim 9 or 10 wherein to deploy the agent within the secure execution environment, the one or more processing devices are further configured to deploy one or more secure kubelets.

12. The apparatus of one of claims 9 to 11 wherein source code for the application includes metadata indicating that the application must be executed in a secure execution environment.

13. The apparatus of one of claims 9 to 12 wherein data associated with the application is encrypted at rest and wherein data communications associated with the application are encrypted.

14. The apparatus of one of claims 9 to 13 wherein the one or more processing devices are further configured to:
receive a request to access the application, and block the request responsive to determining that the request is not issued to a port specified in a configuration for the application; or
receive a request to access the application, and allow the request responsive to determining that the request is issued to a port specified in a configuration for the application.

15. A non-transitory computer readable storage medium storing instructions which, when executed, cause a processing device to perform a method according to one of claims 1 to 8.
